(19) Europäisches Patentamt
European Patent Office
Office européen des brevets

(11) **EP 4 460 142 A1**

(12) **EUROPEAN PATENT APPLICATION**
published in accordance with Art. 153(4) EPC

(43) Date of publication:
**06.11.2024 Bulletin 2024/45**

(21) Application number: **22914599.0**

(22) Date of filing: **24.12.2022**

(51) International Patent Classification (IPC):
**H04W 74/08** (2024.01)

(52) Cooperative Patent Classification (CPC):
**H04L 5/00; H04W 56/00; H04W 74/08**

(86) International application number:
**PCT/CN2022/141719**

(87) International publication number:
**WO 2023/125345 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2021 CN 202111643034**

(71) Applicant: **Spreadtrum Communications
(Shanghai) Co., Ltd.
Shanghai 201203 (CN)**

(72) Inventor: **ZHANG, Meng
Shanghai 201203 (CN)**

(74) Representative: **Mewburn Ellis LLP
Aurora Building
Counterslip
Bristol BS1 6BX (GB)**

(54) **RANDOM ACCESS METHOD AND APPARATUS**

(57) The disclosure discloses a method and apparatus for random access. The method for random access includes the following. The number of retransmissions $N$ of a random access message is determined, where $N$ is an integer greater than 1. A target random access occasion (RO) resource group is determined, where the target RO resource group is an RO resource group corresponding to the number of retransmissions $N$ in RO resource groups corresponding to a target downlink reference signal, and the target RO resource group includes $N$ RO resources corresponding to the target downlink reference signal. The random access message is sent repeatedly to a network device in the target RO resource group based on the number of retransmissions $N$. The method in the disclosure is conducive to reducing complexity of blind detection performed by the network device on the random access message sent repeatedly.

| TERMINAL DEVICE | NETWORK DEVICE |

501, DETERMINE THE NUMBER OF RETRANSMISSIONS $N$ OF RANDOM ACCESS MESSAGE

502, DETERMINE TARGET PHYSICAL RANDOM ACCESS OCCASION (RO) RESOURCE GROUP, WHERE TARGET RO RESOURCE GROUP IS RO RESOURCE GROUP CORRESPONDING TO THE NUMBER OF RETRANSMISSIONS $N$ IN RO RESOURCE GROUPS CORRESPONDING TO TARGET DOWNLINK REFERENCE SIGNAL, AND TARGET RO RESOURCE GROUP INCLUDES $N$ RO RESOURCES CORRESPONDING TO TARGET DOWNLINK REFERENCE SIGNAL

503, SEND REPEATEDLY, BASED ON THE NUMBER OF RETRANSMISSIONS $N$, RANDOM ACCESS MESSAGE TO NETWORK DEVICE IN TARGET RO RESOURCE GROUP

FIG. 5

**Description**

TECHNICAL FIELD

This disclosure relates to the field of communication, and in particular to a method and apparatus for random access.

BACKGROUND

In a wireless communication system, a terminal device establishes a connection with a network device, which is always referred to as a random access (RA) procedure. The terminal device can perform RA by sending a random access message to the network device in physical random access occasion (RO) resources. In order to enhance coverage, some enhancements may be made to transmission of the random access message. For example, coverage may be enhanced by repeatedly sending the random access message. After the terminal device repeatedly sends the random access message, the network device needs to perform blind detection on the random access message sent repeatedly in the RO resources. Since the random access message is sent repeatedly, the blind detection performed by the network device will be relatively complex. Therefore, how to reduce the complexity of the blind detection performed by the network device on the random access message sent repeatedly is an urgent problem to be solved.

SUMMARY

The disclosure provides a method and apparatus for random access, which are conducive to reducing complexity of blind detection performed by a network device on a random access message sent repeatedly.

In a first aspect, the disclosure provides a method for random access. The method for random access is applicable to a terminal device and includes the following. The number of retransmissions $N$ of a random access message is determined, where $N$ is an integer greater than 1. A target random access occasion (RO) resource group is determined, where the target RO resource group is an RO resource group corresponding to the number of retransmissions N in RO resource groups corresponding to a target downlink reference signal, and the target RO resource group includes $N$ RO resources corresponding to the target downlink reference signal. The random access message is sent repeatedly to a network device in the target RO resource group based on the number of retransmissions N.

The method in the first aspect is conducive to reducing complexity of blind detection performed by the network device on the random access message sent repeatedly.

In a possible implementation, RO resources in RO resource groups corresponding to different numbers of retransmissions in the RO resource groups corresponding to the target downlink reference signal may not overlap. In this case, the RO resource groups can be reduced, and the complexity of the blind detection performed by the network device on the random access message can be further reduced.

In a possible implementation, the target downlink reference signal may correspond to $Q$ RO resources, the number of retransmissions $N$ may correspond to M RO resource groups in the RO resource groups corresponding to the target downlink reference signal, and $M=Q/N$, where $Q$ and M are integers greater than 1.

In a possible implementation, the target downlink reference signal may be a synchronization signal (SS)/physical broadcast channel (PBCH) block (SSB), different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a channel state information-reference signal (CSI-RS), and the RO resource groups corresponding to the target downlink reference signal may be obtained by dividing RO resources corresponding to the target downlink reference signal in a same RO list.

In a second aspect, the disclosure provides a method for random access. The method for random access is applicable to a network device and includes the following. A random access message sent repeatedly by a terminal device for $N$ times is received, where $N$ is an integer greater than 1. The random access message sent repeatedly for N times is located in a target RO resource group, the target RO resource group includes $N$ RO resources, and the target RO resource group is an RO resource group corresponding to the number of retransmissions N in RO resource groups corresponding to a target downlink reference signal.

In a possible implementation, RO resources in RO resource groups corresponding to different numbers of retransmissions in the RO resource groups corresponding to the target downlink reference signal may not overlap.

In a possible implementation, the target downlink reference signal may correspond to $Q$ RO resources, the number of retransmissions $N$ may correspond to M RO resource groups in the RO resource groups corresponding to the target downlink reference signal, and $M=Q/N$, where $Q$ and M are integers greater than 1.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a CSI-RS, and the RO resource groups corresponding to the target downlink reference signal may be obtained by dividing RO resources corresponding to the target downlink reference signal in a same RO list.

For beneficial effects of the second aspect, reference may be made to the beneficial effects of the first aspect, which will not be repeated herein.

In a third aspect, the disclosure provides an apparatus for random access. The apparatus for random access includes a unit configured to perform the method in the first aspect or any one of possible implementations thereof, or to perform the method in the second aspect or any one of possible implementations thereof.

In a fourth aspect, the disclosure provides a chip. The chip includes a processor and a communication interface. The processor is configured to cause the chip to perform the method in the first aspect or any one of possible implementations thereof, or to perform the method in the second aspect or any one of possible implementations thereof.

In a fifth aspect, the disclosure provides a module device. The module device includes a communication module, a power module, a storage module, and a chip. The power module is configured to power the module device. The storage module is configured to store data and instructions. The communication module is configured to perform internal communication within the module device or perform communication between the module device and an external device. The chip is configured to perform the method in the first aspect or any one of possible implementations thereof, or to perform the method in the second aspect or any one of possible implementations thereof.

In a sixth aspect, implementations of the disclosure provide an apparatus for random access. The apparatus for random access includes a memory and a processor. The memory is configured to store a computer program, and the computer program includes program instructions. The processor is configured to invoke the program instructions to perform the method in the first aspect or any one of possible implementations thereof, or to perform the method in the second aspect or any one of possible implementations thereof.

In a seventh aspect, the disclosure provides a computer-readable storage medium. The computer-readable storage medium is configured to store computer-readable instructions which, when executed on a communication apparatus, cause the communication apparatus to perform the method in the first aspect or any one of possible implementations thereof, or to perform the method in the second aspect or any one of possible implementations thereof.

In an eighth aspect, the disclosure provides a computer program or computer program product. The computer program or computer program product includes codes or instructions which, when executed on a computer, cause the computer to perform the method in the first aspect or any one of possible implementations thereof, or to perform the method in the second aspect or any one of possible implementations thereof.

BRIEF DESCRIPTION OF THE DRAWINGS

In order to describe more clearly technical solutions of implementations of the disclosure, the following will give a brief introduction to the accompanying drawings used for describing implementations. Apparently, the accompanying drawings described below are some implementations of the disclosure. Based on these drawings, those of ordinary skill in the art can also obtain other drawings without creative effort.

FIG. 1 is a schematic diagram of a communication system provided in implementations of the disclosure.

FIG. 2 is a schematic diagram illustrating a correspondence between synchronization signal (SS) /physical broadcast channel (PBCH) blocks (SSBs) and random access occasion (RO) resources provided in implementations of the disclosure.

FIG. 3 is a schematic diagram illustrating another correspondence between SSBs and RO resources provided in implementations of the disclosure.

FIG. 4 is a schematic diagram illustrating a correspondence between channel state information-reference signal (CSI-RS) resources and RO resources provided in implementations of the disclosure.

FIG. 5 is a schematic flowchart of a method for random access provided in implementations of the disclosure.

FIG. 6 is a schematic structural diagram of an apparatus for random access provided in implementations of the disclosure.

FIG. 7 is a schematic structural diagram of another apparatus for random access provided in implementations of the disclosure.

FIG. 8 is a schematic structural diagram of a module device provided in implementations of the disclosure.

DETAILED DESCRIPTION

The following will clearly and completely describe technical solutions of implementations of the disclosure with reference to accompanying drawings in implementations of the disclosure. Apparently, implementations described herein are merely some implementations, rather than all implementations, of the disclosure. Based on the implementations of the disclosure, all other implementations obtained by those of ordinary skill in the art without creative effort shall fall within the protection scope of the disclosure.

It may be also understood that, the terms used in implementations of the disclosure are merely intended for describing the implementations, rather than limiting implementations of the disclosure. For example, the singular form "a/an", "a kind of" "said", "above", and "the" used in the specification and the appended claims of the disclosure are also intended to include multiple forms, unless specified otherwise in the context. It may also be understood that the term "and/or" used in the disclosure refers to and includes any or all possible combinations of one or more listed items.

It may be noted that the terms "first", "second", "third", and the like used in the specification, the claims, and the accompanying drawings of the disclosure are used to distinguish different objects rather than describe a particular order. It may be understood that the terms thus used may be interchangeable where appropriate, so that the implementations of the disclosure described herein, for example, can be implemented in a sequence other than those illustrated or described herein. In addition, the terms "include" and "comprise" as well as variations thereof are intended to cover a non-exclusive inclusion. For example, a process, method, system, product, or server including a series of operations or units is not limited to the listed operations or units, and instead, it can optionally include other operations or units that are not listed or other operations or units inherent to the process, method, product, or device.

In order to better understand implementations of the disclosure, a system architecture involved in implementations of the disclosure will be first described below.

Technical solutions of implementations of the disclosure are applicable to various communication systems, for example, a global system for mobile communication (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a 5th generation (5G) communication system, new radio (NR), communication systems in the future, etc.

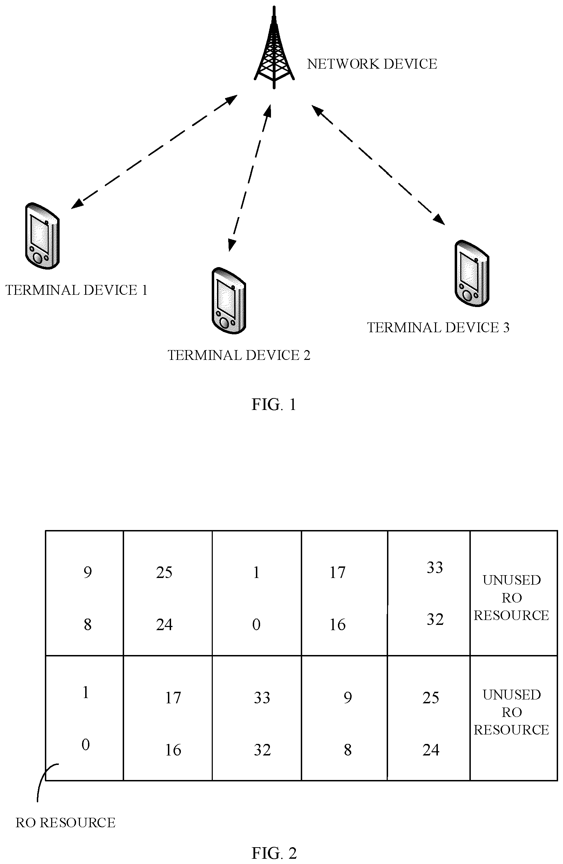

FIG. 1 is a schematic diagram of a communication system provided in implementations of the disclosure to which solutions of the disclosure can be applicable. The communication system may include a network device and at least one terminal device. For illustrative purposes, as illustrated in FIG. 1, the communication system includes a network device and three terminal devices.

1. Terminal device

A terminal device includes a device that provides voice and/or data connectivity to a user, for example, the terminal device may be a device with wireless communication functions. The terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.). The terminal device may be a mobile phone, a pad, a computer with wireless transceiver functions, a virtual reality (VR) terminal device, an augmented reality (AR) terminal device, a wireless terminal in industrial control, a wireless terminal in self-driving, a wireless terminal in remote medicine, a wireless terminal in smart grid, a wireless terminal in transportation safety, a wireless terminal in smart city, a wireless terminal in smart home, a wearable terminal device, etc. Application scenarios are not limited in implementations of the disclosure. The terminal may sometimes be referred to as a terminal device, a user equipment (UE), an access terminal device, an in-vehicle terminal, an industrial control terminal, a UE unit, a UE station, a mobile station, a remote station, a remote terminal device, a mobile device, a UE terminal device, a terminal device, a wireless communication device, a UE agent, a UE apparatus, etc. The terminal may also be fixed or mobile. In implementations of the disclosure, the apparatus for implementing functions of the terminal device may be a terminal device, or may be an apparatus capable of supporting the terminal device to implement the functions, such as a chip system, or a combined device or component that can implement functions of an access network device. The apparatus may be installed in the terminal device.

2. Network device

A network device may be a base station, an evolved NodeB (eNodeB), a transmission reception point (TRP), a next-generation NodeB (gNB) in a fifth-generation (5G) mobile communication system, a next-generation NodeB (gNB) in a sixth generation (6G) mobile communication system, a base station in a future mobile communication system, an access node in a wireless fidelity (Wi-Fi) system, etc. The network device may be a module or unit that implements some functions of the base station. For example, the network device may be a centralized unit (CU) or a distributed unit (DU). The CU implements functions of a radio resource control (RRC) protocol and a packet data convergence protocol (PDCP) of the base station, and may also implement functions of a service data adaptation protocol (SDAP). The DU implements functions of a radio link control (RLC) layer and a media access control (MAC) layer of the base station, and may also implement functions of some physical (PHY) layers or all PHY layers. For specific descriptions of the various layers, reference may be made to related technical standards of the 3rd generation partnership project (3GPP). The network device may be a macro base station, may be a micro base station or an indoor station, may be a relay node or a donor node, etc. In implementations of the disclosure, the apparatus for implementing functions of the network device may be a network device, or may be an apparatus capable of supporting the network device to implement the functions, such as a chip system, or a combined device or component that can implement functions of an access network device. The apparatus may be installed in the terminal device. There is no limitation on a specific technology and a specific device form adopted by the network device in implementations of the disclosure

In order to facilitate the understanding of the solutions provided in implementations of the disclosure, a correspondence between a downlink reference signal and a physical random access occasion (RO) resource will be first described below.

A downlink reference signal may be a synchronous signal (SS)/physical broadcast channel (PBCH) block (SSB) or a channel state information-reference signal (CSI-RS). SSBs are in correspondence with RO resources. CSI-RS resources are in correspondence with the RO resources. Since the CSI-RS resources are in correspondence with the RO resources, it may also be understood that CSI-RSs are in correspondence with the RO resources, and thus RO resources corresponding to the CSI-RSs are RO resources corresponding to the CSI-RS resources. A terminal device may measure one or more downlink reference signals and select a target downlink reference signal or resources for the target downlink reference signal based on measured results. The terminal device may send a random access message in RO resources corresponding to the target downlink reference signal.

1. A correspondence between SSBs and RO resources

One SSB may correspond to multiple RO resources. Multiple SSBs may correspond to a same RO resource, or different SSBs may correspond to different RO resources.

For example, as illustrated in FIG. 2, one SSB corresponds to multiple RO resources, and multiple SSBs correspond to the same RO resource. FIG. 2 illustrates twelve RO resources. Numbers in FIG. 2 are serial numbers of the SSBs. As illustrated in FIG. 2, SSB0 and SSB1 correspond to a same RO resource, SSB8 and SSB9 correspond to a same RO resource, SSB16 and SSB17 correspond to a same RO resource, SSB24 and SSB25 correspond to a same RO resource, and SSB32 and SSB33 correspond to a same RO resource.

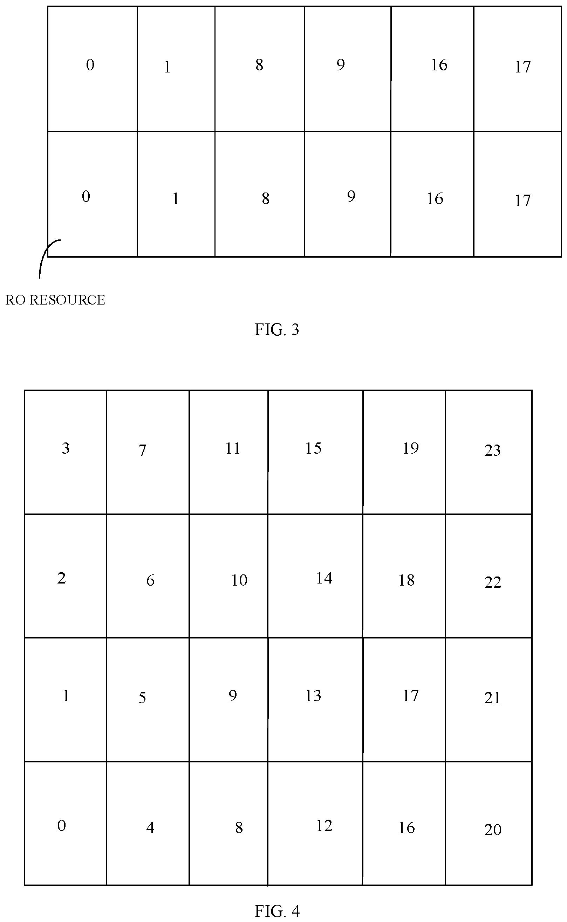

For another example, as illustrated in FIG. 3, one SSB corresponds to multiple RO resources, and different SSBs correspond to different RO resources. FIG. 3 illustrates twelve RO resources. Numbers in FIG. 3 are serial numbers of the SSBs. As illustrated in FIG. 3, SSB0, SSB1, SSB8, SSB9, SSB16, and SSB17 correspond to different RO resources.

2. A correspondence between CSI-RSs and RO resources

One CSI-RS resource may correspond to multiple RO resources. Multiple CSI-RS resources may correspond to a same RO resource, or different CSI-RS resources may correspond to different RO resources.

For example, as illustrated in FIG. 4, one CSI-RS resource corresponds to multiple RO resources, and different CSI-RS resources correspond to different RO resources. FIG. 4 illustrates twenty RO resources. Numbers in FIG. 4 are serial numbers of the RO resources. As illustrated in FIG. 4, CSI-RS resource 1 corresponds to RO resource 1 and RO resource 13, and CSI-RS resource 2 corresponds to RO resource 2 and RO resource 14. A correspondence between the CSI-RS resources and the RO resources may be configured via higher-layer signaling. For example, a network device may configure an RO list corresponding to CSI-RS resource 1 and an RO list corresponding to CSI-RS resource 2 via the higher-layer signaling. The RO list corresponding to CSI-RS resource 1 includes RO resource 1 and RO resource 13. The RO list corresponding to CSI-RS resource 1 includes RO resource 2 and RO resource 14.

FIG. 4 illustrates an example of different CSI-RS resources corresponding to different RO resources. Multiple CSI-RS resources may also correspond to a same RO resource. For example, CSI-RS resource 1 may correspond to RO resource 1 and RO resource 13, and CSI-RS resource 2 may correspond to RO resource 13 and RO resource 14.

In order to reduce complexity of blind detection performed by the network device on the random access message sent repeatedly, the disclosure provides a method and apparatus for random access, a chip, and a module device. The following will elaborate on the method and apparatus for random access, the chip, and the module device provided in implementations of the disclosure.

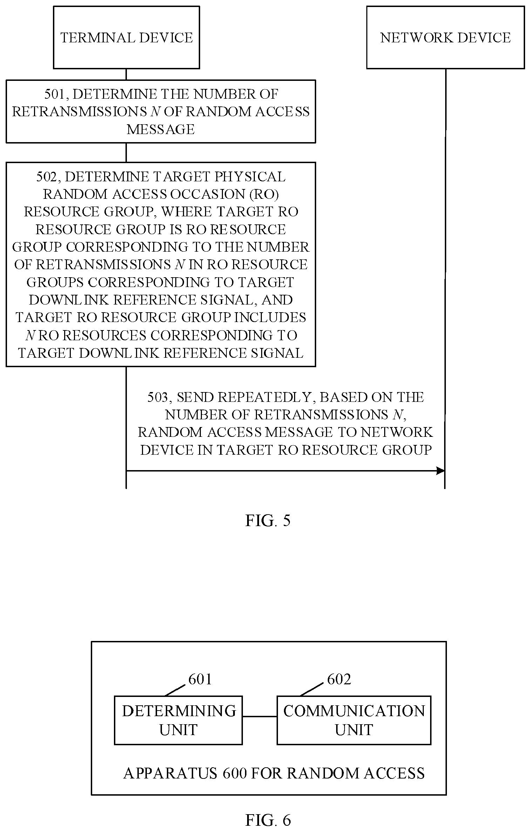

FIG. 5 is a schematic flowchart of a method for random access provided in implementations of the disclosure. As illustrated in FIG. 5, the method for random access includes operations at 501 to operations at 503 as follows. The method as illustrated in FIG. 5 may be implemented by a terminal device and a network device. Alternatively, the method as illustrated in FIG. 5 may be implemented by a chip in the terminal device and a chip in the network device. For illustrative purposes, the method as illustrated in FIG. 5 is implemented by the terminal device and the network device.

At 501, the terminal device determines the number of retransmissions $N$ of a random access message, where N is an integer greater than 1.

At 502, the terminal device determines a target RO resource group, where the target RO resource group is an RO resource group corresponding to the number of retransmissions N in RO resource groups corresponding to a target downlink reference signal, and the target RO resource group includes $N$ RO resources corresponding to the target downlink reference signal.

In implementations of the disclosure, the terminal device may measure one or more downlink reference signals to obtain measured results of the one or more downlink reference signals. For example, the target downlink reference signal may be a downlink reference signal with a largest measured result in the one or more downlink reference signals. When the terminal device is to send the random access message, the terminal device may send the random access message in the RO resources corresponding to the target downlink reference signal, and the terminal device may send the random access message by using a sending beam corresponding to a receiving beam for the target downlink reference signal. In other words, in implementations of the disclosure, the terminal device may repeatedly send the random access message for $N$ times by using a same sending beam.

The sending beam corresponding to the receiving beam for the target downlink reference signal may refer to a sending beam whose beam transmission direction is the same as a beam reception direction of the receiving beam for the target downlink reference signal, or a sending beam sent by using a same spatial domain transmission filter as the receiving beam for the target downlink reference signal.

In implementations of the disclosure, the downlink reference signal may be an SSB or a CSI-RS. If the downlink reference signal is the CSI-RS, the RO resources corresponding to the target downlink reference signal are RO resources corresponding to resources for the target downlink reference signal, and the RO resource groups corresponding to the target downlink reference signal are RO resource groups corresponding to the resources for the target downlink reference signal.

In implementations of the disclosure, the target downlink reference signal corresponds to one or more RO resource groups. The RO resource groups corresponding to the target downlink reference signal are obtained by grouping the RO resources corresponding to the target downlink reference signal. The RO resource groups corresponding to the target downlink reference signal are in correspondence with the number of retransmissions. One RO resource group corresponds to one number of retransmissions, and the number of RO resources included in one RO resource group is the same as the number of retransmissions corresponding to the RO resource group.

RO resource division rules may be predefined in a protocol(s). The terminal device and the network device may group multiple RO resources corresponding to the target downlink reference signal based on the RO resource division rules to obtain one or more RO resource groups. Alternatively, the terminal device may not be required to group the RO resources, the network device may group the multiple RO resources corresponding to the target downlink reference signal based on the RO resource division rules, and then the network device may configure the RO resource groups corresponding to the target downlink reference signal for the terminal device via signaling.

In a possible implementation, RO resources in RO resource groups corresponding to different numbers of retransmissions in the RO resource groups corresponding to the target downlink reference signal may not overlap. In this case, the RO resource groups can be reduced, and complexity of blind detection performed by the network device on the random access message can be further reduced.

For example, if the target downlink reference signal corresponds to 16 RO resources and the number of retransmissions includes {2,4,8} in total, the number of retransmissions 2 corresponds to 2 RO resource groups, and each RO resource group includes 2 RO resources. The 2 RO resource groups corresponding to the number of retransmissions 2 are {RO resource 1-RO resource 2} and {RO resource 3-RO resource 4}.

The number of retransmissions 4 corresponds to 1 RO resource group, and the 1 RO resource group includes 4 RO resources. The 1 RO resource group corresponding to the number of retransmissions 4 is {RO resource 5-RO resource 8}.

The number of retransmissions 8 corresponds to 1 RO resource group, and the 1 RO resource group includes 8 RO resources. The 1 RO resource group corresponding to the number of retransmissions 8 is {RO resource 9-RO resource 16}.

In a possible implementation, the RO resources in the RO resource groups corresponding to different numbers of retransmissions may overlap.

In a possible implementation, the target downlink reference signal may correspond to $Q$ RO resources, the number of retransmissions $N$ may correspond to M RO resource groups in the RO resource groups corresponding to the target downlink reference signal, and $M=Q/N,$ where $Q$ and M are integers greater than 1.

For example, if the target downlink reference signal corresponds to 64 RO resources and the number of retransmissions includes {16,32} in total, the number of retransmissions 16 corresponds to 4 RO resource groups, each RO resource group includes 16 RO resources, and RO resources in different RO resource groups are different. The 4 RO resource groups corresponding to the number of retransmissions 16 are {RO resource 1-RO resource 16}, {RO resource 17-RO resource 32}, {RO resource 33-RO resource 48}, and {RO resource 49-RO resource 64}.

The number of retransmissions 32 corresponds to 2 RO resource groups, each RO resource group includes 32 RO resources, and RO resources in different RO resource groups are different. The 2 RO resource groups corresponding to the number of retransmissions 32 are {RO resource 1-RO resource 32} and {RO resource 33-RO resource 64}.

Therefore, there are a total of 6 RO resource groups. If the number of retransmissions N is 16, the terminal device may select any RO resource group from the 4 RO resource groups corresponding to the number of retransmissions 16 to send the random access message. If the selected RO resource group is {RO resource 1-RO resource 16}, optionally, a random access message may be sent for the first time in RO resource 1, a random access message may be sent for the second time in RO resource 2, ..., or the like, and a random access message may be sent for the sixteenth time in RO resource 16.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

For example, 16 RO resources corresponding to the target downlink reference signal are included in a random access configuration cycle. The RO resource groups corresponding to the target downlink reference signal may be obtained by dividing the 16 RO resources corresponding to the target downlink reference signal.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

For example, for two consecutive random access configuration cycles, 8 RO resources corresponding to the target downlink reference signal are included in a previous random access configuration cycle, and 8 RO resources corresponding to the target downlink reference signal are included in a subsequent random access configuration cycle. The RO resource groups corresponding to the target downlink reference signal may be obtained by dividing the 16 RO resources corresponding to the target downlink reference signal.

In a possible implementation, the target downlink reference signal may be a CSI-RS, and the RO resource groups corresponding to the target downlink reference signal may be obtained by dividing RO resources corresponding to the target downlink reference signal in a same RO list.

An RO list corresponding to the target downlink reference signal is an RO list corresponding to the resources for the target downlink reference signal. As mentioned above, the network device may configure the correspondence between the CSI-RS resources and the RO resources for the terminal device via the higher-layer signaling. The network device may configure the correspondence between the CSI-RS resources and the RO resources by sending RO lists corresponding to the CSI-RS resources via the higher-layer signaling. For example, the network device may configure an RO list corresponding to CSI-RS resources 1 via the higher-layer signaling. The RO list corresponding to CSI-RS resources 1 includes RO resources 1 to RO resources 16. RO resource groups corresponding to CSI-RS resources 1 may be obtained by dividing the 16 RO resources.

At 503, the terminal device sends repeatedly, based on the number of retransmissions *N,* the random access message to the network device in the target RO resource group.

A network device side usually determines whether the random access message is received by performing blind detection on preambles in RO resources. Since the network device does not know the number of retransmissions of the random access message by the terminal device, the network device may perform blind detection on the random access message for various numbers of retransmissions, various combinations of the RO resources, and various combinations of the preambles. For example, if the number of retransmissions includes {2,4,6,8}, the network device will first perform blind detection on the random access message for the number of retransmissions 2. If there are 30 RO resources and 64 preambles, selecting 2 RO resources from the 30 RO resources has $C_{30}^{2}$ combinations, selecting 2 preambles from 64 preambles has $C_{64}^{2}$ combinations. Therefore, when the network device is to perform blind detection for the number of retransmissions 2, the network device may perform at most $C_{64}^{2} * C_{30}^{2}$ blind detections. If the random access message is not detected blindly by the network device when the number of retransmissions is 2, the network device will continue to perform blind detection on the random access message for a next number of retransmissions. Therefore, if the RO resources are not grouped and RO resource groups are not in correspondence with the number of retransmissions, the complexity of the blind detection by the network device side is relatively large. If the RO resources are grouped and the RO resources groups are in correspondence with the number of retransmissions, the complexity of the blind detection by the network device side can be reduced. For example, if the number of retransmissions 2 corresponds to 15 RO resource groups, when the network device is to perform blind detection for the number of retransmissions 2, the network device may perform at most $15 * C_{64}^2$ blind detections, which greatly reduces the complexity of the blind detection by the network side.

As can be seen, the method as illustrated in FIG. 5 is beneficial to reduce the complexity of the blindly detection by the network device on the random access message sent repeatedly.

Reference may be made to FIG. 6, which is a schematic structural diagram of an apparatus for random access provided in implementations of the disclosure. The apparatus for random access may be a terminal device or an apparatus with functions of the terminal device (e.g., a chip). Specifically, as illustrated in FIG. 6, the apparatus 600 for random access may include a determining unit 601 and a communication unit 602. The determining unit 601 is configured to determine the number of retransmissions $N$ of a random access message, where $N$ is an integer greater than 1. The determining unit 601 is further configured to determine a target RO resource group, where the target RO resource group is an RO resource group corresponding to the number of retransmissions $N$ in RO resource groups corresponding to a target downlink reference signal, and the target RO resource group includes $N$ RO resources corresponding to the target downlink reference signal. The communication unit 602 is configured to send repeatedly, based on the number of retransmissions N, the random access message to a network device in the target RO resource group.

In a possible implementation, RO resources in RO resource groups corresponding to different numbers of retransmissions in the RO resource groups corresponding to the target downlink reference signal may not overlap.

In a possible implementation, the target downlink reference signal may correspond to $Q$ RO resources, the number of retransmissions $N$ may correspond to $M$ RO resource groups in the RO resource groups corresponding to the target downlink reference signal, and $M=Q/N$, where $Q$ and $M$ are integers greater than 1.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a CSI-RS, and the RO resource groups corresponding to the target downlink reference signal may be obtained by dividing RO resources corresponding to the target downlink reference signal in a same RO list.

Implementations of the disclosure further provide an apparatus for random access. The apparatus for random access may be a network device or an apparatus with functions of the network device (e.g., a chip). Specifically, the apparatus for random access may include a communication unit. The communication unit is configured to receive a random access message sent repeatedly by a terminal device for $N$ times, where $N$ is an integer greater than 1. The random access message sent repeatedly for N times is located in a target RO resource group, the target RO resource group includes $N$ RO resources, and the target RO resource group is an RO resource group corresponding to the number of retransmissions $N$ in RO resource groups corresponding to a target downlink reference signal.

In a possible implementation, RO resources in RO resource groups corresponding to different numbers of retransmissions in the RO resource groups corresponding to the target downlink reference signal may not overlap.

In a possible implementation, the target downlink reference signal may correspond to $Q$ RO resources, the number of retransmissions $N$ may correspond to M RO resource groups in the RO resource groups corresponding to the target downlink reference signal, and $M=Q/N$, where $Q$ and $M$ are integers greater than 1.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a CSI-RS, and the RO resource groups corresponding to the target downlink reference signal may be obtained by dividing RO resources corresponding to the target downlink reference signal in a same RO list.

Implementations of the disclosure further provide a chip. The chip is configured to perform the operations executed by the terminal device in the method implementations. The chip includes a processor and a communication interface. The processor is configured to cause the chip to perform the following operations. The number of retransmissions $N$ of a random access message is determined, where $N$ is an integer greater than 1. A target downlink reference signal is determined. A target RO resource group is determined, where the target RO resource group is an RO resource group corresponding to the number of retransmissions $N$ in RO resource groups corresponding to a target downlink reference signal, and the target RO resource group includes $N$ RO resources corresponding to the target downlink reference signal. The random access message is sent repeatedly, based on the number of retransmissions $N$, to a network device in the target RO resource group.

In a possible implementation, RO resources in RO resource groups corresponding to different numbers of retransmissions in the RO resource groups corresponding to the target downlink reference signal may not overlap.

In a possible implementation, the target downlink reference signal may correspond to $Q$ RO resources, the number of retransmissions $N$ corresponds to $M$ RO resource groups in the RO resource groups corresponding to the target downlink reference signal, and $M=Q/N$, where $Q$ and $M$ are integers greater than 1.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a CSI-RS, and the RO resource groups corresponding to the target downlink reference signal may be obtained by dividing RO resources corresponding to the target downlink reference signal in a same RO list.

Implementations of the disclosure further provide a chip. The chip is configured to perform the operations executed by the network device in the method implementations. The chip includes a processor and a communication interface. The processor is configured to cause the chip to perform the following operations. A random access message sent repeatedly by a terminal device for $N$ times is received, where $N$ is an integer greater than 1. The random access message sent repeatedly for N times is located in a target RO resource group, the target RO resource group includes $N$ RO resources, and the target RO resource group is an RO resource group corresponding to the number of retransmissions N in RO resource groups corresponding to a target downlink reference signal.

erence signal.

In a possible implementation, RO resources in RO resource groups corresponding to different numbers of retransmissions in the RO resource groups corresponding to the target downlink reference signal may not overlap.

In a possible implementation, the target downlink reference signal may correspond to $Q$ RO resources, the number of retransmissions $N$ may correspond to $M$ RO resource groups in the RO resource groups corresponding to the target downlink reference signal, and $M=Q/N$, where $Q$ and $M$ are integers greater than 1.

In a possible implementation, the target downlink reference signal may be an SSB, different SSBs may correspond to different RO resources, and the RO resource groups corresponding to the target downlink reference signal may be obtained by dividing RO resources corresponding to the target downlink reference signal in a same random access configuration cycle.

In a possible implementation, the target downlink reference signal may be an SSB, multiple downlink reference signals may correspond to a same RO resource, and the RO resource groups corresponding to the target downlink reference signal may be obtained by dividing RO resources corresponding to the target downlink reference signal in multiple random access configuration cycles.

In a possible implementation, the target downlink reference signal may be a CSI-RS, and the RO resource groups corresponding to the target downlink reference signal may be obtained by dividing RO resources corresponding to the target downlink reference signal in a same RO list.

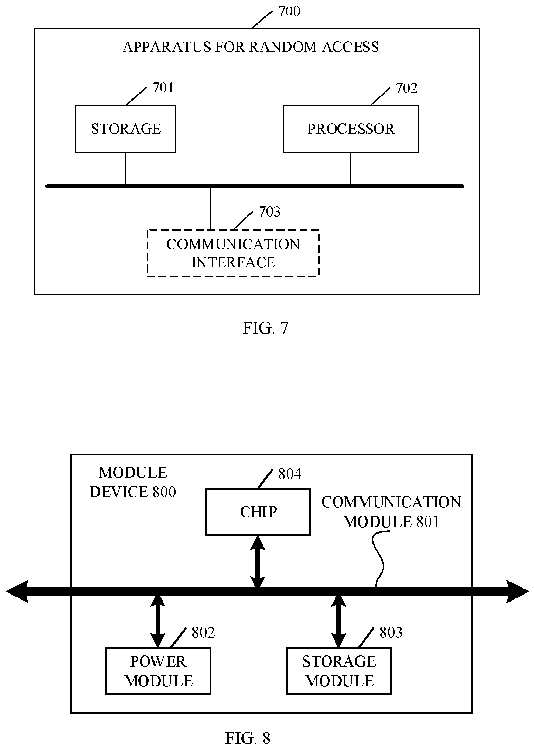

Reference may be made to FIG. 7, which is a schematic structural diagram of an apparatus for random access provided in implementations of the disclosure. The apparatus for random access may be a terminal device or a network device. The apparatus 700 for random access may include a memory 701 and a processor 702. Optionally, the apparatus 700 for random access may further include a communication interface 703. The memory 701, the processor 702, and the communication interface 703 are connected with each other via one or more communication buses. The communication interface 703 is controlled by the processor 702 and is configured to send or receive information.

The memory 701 may include a read-only memory (ROM) and a random access memory (RAM) and provide instructions and data to the processor 702. A part of the memory 701 may also include a non-volatile RAM.

The communication interface 703 is configured to receive or send data.

The processor 702 may be a central processing unit (CPU). The processor 702 may also be a general-purpose processor, a digital signal processor (DSP), an application-specific integrated circuit (ASIC), a field programmable gate array (FPGA), or other programmable logic devices, discrete gates or transistor logic devices,

17      **EP 4 460 142 A1**      18

discrete hardware components, etc. The general-purpose processor may be a microprocessor. Optionally, the processor 702 may be any conventional processor or the like.

The memory 701 is configured to store program instructions. The processor 702 is configured to invoke the program instructions stored in memory 701. The processor 702 is configured to invoke the program instructions stored in the memory 701 to cause the apparatus 700 for random access to perform the method executed by the terminal device or the network device in the method implementations.

Reference may be made to FIG. 8, which is a schematic structural diagram of a module device provided in implementations of the disclosure. A module device 800 may perform the operations executed by the terminal device or the network device in the method implementations. The module device 800 may include a communication module 801, a power module 802, a storage module 803, and a chip 804. The power module 802 is configured to power the module device. The storage module 803 is configured to store data and instructions. The communication module 801 is configured to perform internal communication within the module device or to perform communication between the module device and an external device. The chip 804 is configured to perform the methods executed by the terminal device or the network device in the method implementations.

It may be noted that, for contents not mentioned and specific implementations of each operation in implementations as illustrated in FIG. 7 and FIG. 8, reference may be made to implementations as illustrated in FIG. 5 and the foregoing contents, which will not be repeated herein.

Implementations of the disclosure further provide a computer-readable storage medium. The computer-readable storage medium is configured to store computer-readable instructions which, when executed on a processor, cause the processor to implement the operations of the method of the method implementations.

Implementations of the disclosure further provide a computer program product which, when executed on a processor, causes the processor to implement the operations of the method of the method implementations.

Each module/unit in the apparatuses or products described in the foregoing implementations may be a software module/unit, a hardware module/unit, or may be partially a software module/unit and partially a hardware module/unit. For example, for each apparatus and product applicable to or integrated into a chip, each module/unit included may be implemented by means of hardware such as circuits or the like, or at least part of modules/units may be implemented by means of a software program that run on a processor integrated inside the chip, and the rest of (if any) modules/units may be implemented by means of hardware such as circuits or the like. For each apparatus and product applicable to or integrated into a chip module, each module/unit included may be implemented by means of hardware such as circuits or the like, and different modules/units may be located in a same component (such as a chip, a circuit module, etc.) or different components of the chip module. Alternatively, at least part of modules/units may be implemented by means of the software program that is run on the processor integrated inside the chip module, and the rest of (if any) modules/units may be implemented by means of hardware such as circuits or the like. For each apparatus and product applicable to or integrated into a terminal device, each module/unit included may be implemented by means of hardware such as circuits or the like, and different modules/units may be located in a same component (e.g., a chip, a circuit module, etc.) or different components in the terminal device, or at least part of modules/units may be implemented by means of the software program that run on the processor integrated inside the terminal device, and the rest of (if any) modules/units may be implemented by means of hardware such as circuits or the like.

It may be noted that, for the sake of simplicity, the various method implementations above are described as a series of action combinations. However, it will be appreciated by those skilled in the art that the disclosure is not limited by the sequence of actions described. According to the disclosure, some operations may be performed in other orders or simultaneously. In addition, it will be appreciated by those skilled in the art that the implementations described in the specification are preferable implementations, and the actions and modules involved are not necessarily essential to the disclosure.

For descriptions of implementations of the disclosure, references may be made to each other, and the description of each implementation has its own emphasis. For a part not described in detail in an implementation, reference may be made to related illustrations in other implementations. For the sake of convenience and brevity, for example, for functions and performed operations of the apparatuses and devices provided in implementations of the disclosure, reference may be made to related descriptions in the method implementations of the disclosure. Mutual reference, combination, or citing may also be made between the method implementations and between the apparatus implementations.

Finally, it may be noted that, the foregoing implementations are merely intended for describing the technical solutions of the disclosure, but are not intended to limit the disclosure. Although the disclosure is described in detail with reference to the foregoing implementations, those of ordinary skill in the art may understand that modifications can still be made to the technical solutions described in the foregoing implementations, or equivalent replacements can be made to some or all technical features. However, these modifications or replacements do not make the essence of the corresponding technical solutions depart from the scope of the technical solutions of the implementations of the disclosure.

10

Claims

1.  A method for random access, applicable to a terminal device and comprising:

    determining the number of retransmissions *N* of a random access message, wherein *N* is an integer greater than 1;
    determining a target random access occasion (RO) resource group, wherein the target RO resource group is an RO resource group corresponding to the number of retransmissions N in RO resource groups corresponding to a target downlink reference signal, and the target RO resource group comprises *N* RO resources corresponding to the target downlink reference signal; and
    sending repeatedly, based on the number of retransmissions N, the random access message to a network device in the target RO resource group.

2.  The method of claim 1, wherein RO resources in RO resource groups corresponding to different numbers of retransmissions in the RO resource groups corresponding to the target downlink reference signal do not overlap.

3.  The method of claim 1, wherein the target downlink reference signal corresponds to Q RO resources, the number of retransmissions *N* corresponds to M RO resource groups in the RO resource groups corresponding to the target downlink reference signal, and *M=Q/N,* wherein Q and M are integers greater than 1.

4.  The method of any one of claims 1 to 3, wherein the target downlink reference signal is a synchronization signal (SS)/physical broadcast channel (PBCH) block (SSB), different SSBs correspond to different RO resources, and the RO resource groups corresponding to the target downlink reference signal are obtained by dividing RO resources corresponding to the target downlink reference signal in a same random access configuration cycle.

5.  The method of any one of claims 1 to 3, wherein the target downlink reference signal is an SSB, a plurality of downlink reference signals correspond to a same RO resource, and the RO resource groups corresponding to the target downlink reference signal are obtained by dividing RO resources corresponding to the target downlink reference signal in a plurality of random access configuration cycles.

6.  The method of any one of claims 1 to 3, wherein the target downlink reference signal is a channel state information-reference signal (CSI-RS), and the RO resource groups corresponding to the target downlink reference signal are obtained by dividing RO resources corresponding to the target downlink reference signal in a same RO list.

7.  A method for random access, applicable to a network device and comprising:

    receiving a random access message sent repeatedly by a terminal device for *N* times, wherein *N* is an integer greater than 1, wherein the random access message sent repeatedly for N times is located in a target random access occasion (RO) resource group, the target RO resource group comprises *N* RO resources, and the target RO resource group is an RO resource group corresponding to the number of retransmissions N in RO resource groups corresponding to a target downlink reference signal.

8.  The method of claim 7, wherein RO resources in RO resource groups corresponding to different numbers of retransmissions in the RO resource groups corresponding to the target downlink reference signal do not overlap.

9.  The method of claim 7, wherein the target downlink reference signal corresponds to Q RO resources, the number of retransmissions *N* corresponds to M RO resource groups in the RO resource groups corresponding to the target downlink reference signal, and *M=Q/N,* wherein Q and M are integers greater than 1.

10. The method of any one of claims 7 to 9, wherein the target downlink reference signal is a synchronization signal (SS)/physical broadcast channel (PBCH) block (SSB), different SSBs correspond to different RO resources, and the RO resource groups corresponding to the target downlink reference signal are obtained by dividing RO resources corresponding to the target downlink reference signal in a same random access configuration cycle.

11. The method of any one of claims 7 to 9, wherein the target downlink reference signal is an SSB, a plurality of downlink reference signals correspond to a same RO resource, and the RO resource groups corresponding to the target downlink reference signal are obtained by dividing RO resources corresponding to the target downlink reference signal in a plurality of random access configuration cycles.

12. The method of any one of claims 7 to 9, wherein the target downlink reference signal is a channel state information-reference signal (CSI-RS), and the RO resource groups corresponding to the target downlink reference signal are obtained by dividing RO resources corresponding to the target downlink reference signal in a same RO list.

13. An apparatus for random access, comprising:

a determining unit configured to:

determine the number of retransmissions $N$ of a random access message, wherein $N$ is an integer greater than 1; and
determine a target random access occasion (RO) resource group, wherein the target RO resource group is an RO resource group corresponding to the number of retransmissions $N$ in RO resource groups corresponding to a target downlink reference signal, and the target RO resource group comprises $N$ RO resources corresponding to the target downlink reference signal; and

a communication unit configured to send repeatedly, based on the number of retransmissions $N,$ the random access message to a network device in the target RO resource group.

14. An apparatus for random access, comprising:

a communication unit configured to receive a random access message sent repeatedly by a terminal device for $N$ times, wherein $N$ is an integer greater than 1, wherein
the random access message sent repeatedly for $N$ times is located in a target random access occasion (RO) resource group, the target RO resource group comprises $N$ RO resources, and the target RO resource group is an RO resource group corresponding to the number of retransmissions $N$ in RO resource groups corresponding to a target downlink reference signal.

15. A chip, comprising:

a communication interface; and
a processor configured to cause the chip to perform the method of any one of claims 1 to 6 or perform the method of any one of claims 7 to 12.

16. A module device, comprising:

a power module configured to power the module device;
a storage module configured to store data and instructions;
a communication module configured to perform internal communication within the module device or perform communication between the module device and an external device; and
a chip configured to perform the method of any one of claims 1 to 6 or perform the method of any one of claims 7 to 12.

17. An apparatus for random access, comprising:

a memory configured to store a computer program, the computer program comprising program instructions; and
a processor configured to invoke the program instructions to cause the apparatus for random access to perform the method of any one of claims 1 to 6 or perform the method of any one of claims 7 to 12.

18. A computer-readable storage medium configured to store computer-readable instructions which, when executed on a communication apparatus, cause the communication apparatus to perform the method of any one of claims 1 to 6 or perform the method of any one of claims 7 to 12.

19. A computer program product comprising codes or instructions which, when executed on a computer, cause the computer to perform the method of any one of claims 1 to 6 or perform the method of any one of claims 7 to 12.

20. A communication system, comprising:

a terminal device configured to perform the method of any one of claims 1 to 6; and
a network device configured to perform the method of any one of claims 7 to 12.

FIG. 1

| | | | | | |
|---|---|---|---|---|---|
| 9<br><br>8 | 25<br><br>24 | 1<br><br>0 | 17<br><br>16 | 33<br><br>32 | UNUSED RO RESOURCE |
| 1<br><br>0 | 17<br><br>16 | 33<br><br>32 | 9<br><br>8 | 25<br><br>24 | UNUSED RO RESOURCE |

RO RESOURCE

FIG. 2

| 0 | 1 | 8 | 9 | 16 | 17 |
|---|---|---|---|----|----|
| 0 | 1 | 8 | 9 | 16 | 17 |

RO RESOURCE

FIG. 3

| 3 | 7 | 11 | 15 | 19 | 23 |
|---|---|----|----|----|----|
| 2 | 6 | 10 | 14 | 18 | 22 |
| 1 | 5 | 9 | 13 | 17 | 21 |
| 0 | 4 | 8 | 12 | 16 | 20 |

FIG. 4

TERMINAL DEVICE

NETWORK DEVICE

501, DETERMINE THE NUMBER OF RETRANSMISSIONS $N$ OF RANDOM ACCESS MESSAGE

502, DETERMINE TARGET PHYSICAL RANDOM ACCESS OCCASION (RO) RESOURCE GROUP, WHERE TARGET RO RESOURCE GROUP IS RO RESOURCE GROUP CORRESPONDING TO THE NUMBER OF RETRANSMISSIONS $N$ IN RO RESOURCE GROUPS CORRESPONDING TO TARGET DOWNLINK REFERENCE SIGNAL, AND TARGET RO RESOURCE GROUP INCLUDES $N$ RO RESOURCES CORRESPONDING TO TARGET DOWNLINK REFERENCE SIGNAL

503, SEND REPEATEDLY, BASED ON THE NUMBER OF RETRANSMISSIONS $N$, RANDOM ACCESS MESSAGE TO NETWORK DEVICE IN TARGET RO RESOURCE GROUP

FIG. 5

601

602

DETERMINING UNIT

COMMUNICATION UNIT

APPARATUS 600 FOR RANDOM ACCESS

FIG. 6

FIG. 7

FIG. 8

| **INTERNATIONAL SEARCH REPORT** | International application No. |
| --- | --- |
| | **PCT/CN2022/141719** |

**A.    CLASSIFICATION OF SUBJECT MATTER**

H04W 74/08(2009.01)i

According to International Patent Classification (IPC) or to both national classification and IPC

**B.    FIELDS SEARCHED**

Minimum documentation searched (classification system followed by classification symbols)

IPC:H04B,H04W,H04L,H04Q

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 随机接入, 重传, 重复, 资源, 时机, 机会, 次数, 组, 集, access, random, repetition, resource, occasion, time, group, set, RACH, RO

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021221381 A1 (INNOVATIVE TECHNOLOGY LAB CO., LTD.) 04 November 2021 (2021-11-04)<br>     description, paragraphs 180 and 200-371, and abstract | 1-20 |
| A | WO 2020237679 A1 (BEIJING XIAOMI MOBILE SOFTWARE CO., LTD.) 03 December 2020 (2020-12-03)<br>     entire document | 1-20 |
| A | CN 112888070 A (CHINA ACADEMY OF INFORMATION AND COMMUNICATIONS TECHNOLOGY) 01 June 2021 (2021-06-01)<br>     entire document | 1-20 |
| A | CN 111757538 A (HUAWEI TECHNOLOGIES CO., LTD.) 09 October 2020 (2020-10-09)<br>     entire document | 1-20 |
| A | CN 108029136 A (HUAWEI TECHNOLOGIES CO., LTD.) 11 May 2018 (2018-05-11)<br>     entire document | 1-20 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 February 2023** | **22 February 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/141719**

| Patent document cited in search report | | | Publication date (day/month/year) | Patent family member(s) | | | Publication date (day/month/year) |
|---|---|---|---|---|---|---|---|
| WO | 2021221381 | A1 | 04 November 2021 | KR | 20210133423 | A | 08 November 2021 |
| WO | 2020237679 | A1 | 03 December 2020 | | None | | |
| CN | 112888070 | A | 01 June 2021 | | None | | |
| CN | 111757538 | A | 09 October 2020 | WO | 2020199930 | A1 | 08 October 2020 |
| CN | 108029136 | A | 11 May 2018 | US | 2018310344 | A1 | 25 October 2018 |
| | | | | US | 2020404715 | A1 | 24 December 2020 |
| | | | | WO | 2017113085 | A1 | 06 July 2017 |
| | | | | EP | 3386261 | A1 | 10 October 2018 |
| | | | | CN | 112911582 | A | 04 June 2021 |

Form PCT/ISA/210 (patent family annex) (July 2022)